**Europäisches Patentamt**

**European Patent Office**

**Office européen des brevets**

(11) Publication number : **0 579 427 A1**

# EUROPEAN PATENT APPLICATION

(21) Application number : **93305223.5**

(22) Date of filing : **02.07.93**

(51) Int. Cl.$^5$ : **G02B 13/18, G02B 9/02, G02B 3/04**

(30) Priority : **14.07.92 JP 187046/92**

(43) Date of publication of application : **19.01.94 Bulletin 94/03**

(84) Designated Contracting States : **DE FR GB IT**

(71) Applicant : **KONICA CORPORATION 26-2, Nishi-shinjuku 1-chome Shinjuku-ku Tokyo 163 (JP)**

(72) Inventor : **Mori, Nobuyoshi c/o Konica Corporation, 2970 Ishikawa-cho Hachioji-shi, Tokyo (JP)**

(74) Representative : **Wood, Anthony Charles Urquhart-Dykes & Lord 91 Wimpole Street London W1M 8AH (GB)**

(54) **Single aspheric lens camera.**

(57) A photographic lens disposed between an object and an image formation surface, a diaphragm being provided between the photographic lens and the image formation surface, the photographic lens being a positive meniscus lens provided with the convex surface on the object side, the photographic lens projecting an image of the object on the image formation surface. A curved lens surface at least on the image formation surface side is formed in accordance with a function by which an aspheric deformation amount in a position on the lens surface is negatively increased the further the position is from the optical axis of the meniscus lens.

## FIG. 1

DIAPHRAGM

EP 0 579 427 A1

## BACKGROUND OF THE INVENTION

The present invention relates to a photographic lens, and more particularly relates to a photographic lens with less distortion, a photographic lens system and a camera to which this photographic lens is assembled.

A photographic lens system composed of a single lens and a diaphragm suitable for a fixed-focus camera, the F-number of which is large and the cost of which is low, can be classified into two types. (1) One is a photographic lens system in which the diaphragm and the lens are disposed, wherein a certain distance is maintained between the diaphragm and the lens. (2) The other is a photographic lens system in which the diaphragm and the lens are disposed close to each other, or they are contacted with each other. The former (1) is disclosed in Japanese Patent Publication Open to Public Inspection No. 199351/1988, and the latter (2) is disclosed in Japanese Patent Publication Open to Public Inspection Nos. 246713/1988 and 259108/1991.

However, in the case of the photographic lens of (1) in Japanese Patent Publication Open to Public Inspection No. 199351/1988, the distortion exceeds 10% when the half angle of view is 30°. On the contrary, in the case of a photographic lens in which the distortion is corrected to be relatively small, the astigmatism aberration at an intermediate portion of the angle of view is remarkably large, so that sufficient image formation property can not be provided. In the photographic lens system of (2), the diaphragm is disposed close to the lens in order to correct the distortion.

In the photographic lens system disclosed in Japanese Patent Publication No. 246713/1988, the distortion is appropriately corrected, however, the spherical aberration is remarkably large, and moreover, introverting coma flare of higher order aberration is increased at an intermediate portion of the angle of view, so that excellent images can not be formed. In the photographic lens system disclosed in Japanese Patent Publication No. 259108/1991, the distortion is not sufficiently corrected, and moreover spherical aberration is large at an intermediate portion of the angle of view.

As described above, in the conventional photographic lens, photographic lens system and camera to which the photographic lens system is assembled, a single lens can not appropriately correct the distortion. In general, when the distortion is corrected, coma and other aberrations are increased to a high level, so that an excellent photographic lens system can not be provided.

## SUMMARY OF THE INVENTION

It is a primary object of the present invention to provide a photographic lens system of simple structure in which distortion can be appropriately corrected and image quality is high, wherein the photographic lens system of the invention is particularly effective when it is applied to a wide-angle lens.

In order to accomplish the object, the present invention is to provide a photographic lens disposed between an object and an image formation surface, a diaphragm being provided between the photographic lens and the image formation surface, the photographic lens being a positive meniscus lens provided with the convex surface on the object side, the photographic lens projecting an image of the object on the image formation surface, wherein a curved lens surface at least on the image formation surface side is formed in accordance with a function by which an aspherical deformation amount in a position on the lens surface is negatively increased the further the position is from the optical axis of the lens.

Moreover, the present invention is to provide a photographic lens disposed between an object and an image formation surface, a diaphragm being provided between the photographic lens and the image formation surface, the photographic lens being a positive meniscus lens provided with a convex surface on the object side, the photographic lens projecting an image of the object on the image formation surface, wherein the photographic lens includes an aspherical surface on which a local center of curvature of the lens surface at a position at least on the image formation surface side is moved from the image formation surface side to the object side the further the position is from the optical axis of the lens.

Moreover, the present invention is to provide a photographic lens disposed between an object and an image formation surface, a diaphragm being provided between the photographic lens and the image formation surface, the photographic lens being a positive meniscus lens provided with the convex surface on the object side, the photographic lens projecting an image of the object on the image formation surface, wherein the lens surface at least on the image formation surface side of the photographic lens includes a point of inflection at a position other than the optical axis of the lens.

Moreover, when the image formation surface is cylindrical being curved on the lens side, a desirable effect can be provided.

Further, the present invention is to provide a photographic lens disposed between an object and an image formation surface, a diaphragm being provided between the photographic lens and the image formation surface, the photographic lens being a positive meniscus lens provided with the convex surface on the object side, the photographic lens projecting an image of the object on a curved image formation surface, wherein the lens surface at least on the image formation surface side of the photographic lens includes a point of inflection at a position other than the optical axis of the lens, and the lens surface on the object side of the photographic lens includes a point of inflection at a position further from the optical axis than the position of the point of inflection on the image formation surface side.

Further, the present invention is to provide a photographic lens system disposed between an object and an image formation surface, the photographic lens being a positive meniscus lens provided with the convex surface on the object side, the photographic lens projecting an image of the object on a curved image formation surface, a diaphragm being provided at a predetermined position between the image formation surface and the photographic lens, wherein the lens surface at least on the image formation surface side of the photographic lens includes a point of inflection at a position other than the optical axis of the lens, and the lens surface on the object side of the photographic lens includes a point of inflection at a position further from the optical axis than the position of the point of inflection on the image formation surface side.

Further, the present invention is to provide a camera including a photographic lens system disposed between an object and an image formation surface, the photographic lens being a positive meniscus lens provided with the convex surface on the object side, the photographic lens projecting an image of the object on a curved image formation surface, a diaphragm being provided at a predetermined position between the image formation surface and the photographic lens, the image formation surface being a photographic film fed by a camera, wherein the lens surface at least on the image formation surface side of the photographic lens includes a point of inflection at a position other than the optical axis of the lens, and the lens surface on the object side of the photographic lens includes a point of inflection at a position further from the optical axis than the position of the point of inflection on the image formation surface side.

In the case of a wide-angle lens, the angle of view of which is not less than 50°, the distortion can be corrected, and moreover, in the case where the radius of curvature of the image formation surface is 80 to 270 mm, the distortion can be corrected more desirably.

When the following condition (1) is satisfied, the effect of the invention can be increased, wherein the focal distance of the photographic lens is f, and a distance between the photographic lens and the diaphragm is d.

$$0.05 < d/f < 0.15 \quad (1)$$

When the diaphragm is disposed behind the lens, a position on the lens through which light flux passes is changed, depending on the incident-angle of view. Therefore, each light flux is affected by a local radius of curvature. According to a law, when a surface having a positive refractive power is disposed in front of the diaphragm, positive distortion is increased. On the contrary, when a surface having a negative refractive power is disposed in front of the diaphragm, positive distortion is decreased. In the photographic lens of this invention, the farther the lens surface position is from the optical axis, the more the local radius of curvature is reduced, and the center of curvature is changed from the image formation side to the object side, and then the radius of curvature is increased again. The lens surface is formed to be aspherical in the aforementioned manner. Therefore, with respect to light flux not along the optical axis, on the object side, the more the angle of view is increased, the more the local refractive power is changed from positive to negative, and on the contrary, on the image side, the more the angle of view is increased, the more the local refractive power is changed from negative to positive.

The surface on the object side is formed to be aspherical in such a manner that: the farther the position is from the optical axis, the more the local positive refractive power is reduced. Moreover, the surface on the image formation side is formed to be aspherical in such a manner that: the farther the position is from the optical axis, the more the local negative refractive power is reduced. When the aspherical surface is formed, in the aforementioned manner, the same effect can be provided.

Accordingly, with respect to the light flux not along the optical axis, positive distortion can be reduced. Condition (1) is related to the arrangement of the diaphragm. When a value of d/f is smaller than the lower limit expressed by condition (1), the diaphragm and the lens are located too close to each other, so that a difference of the light flux passing positions caused by the angle of view is small. Therefore, when the distortion is forcibly corrected, coma flare is generated, the image formation capacity is deteriorated, and moreover, introverting coma of the third aberration and astigmatism aberration are increased. When a value of d/f exceeds the upper limit of condition (1), the lens diameter is extremely increased. Consequently, it is necessary to increase the thickness of the lens. As a result, transverse chromatic aberration is increased.

In the present invention, at least on the image formation side, the local radius of curvature is changed from the image formation side to the object side. When the radius of curvature at a position where the radius of curvature is changed in the aforementioned manner is smaller than that at the optical axis position, the effect of the present invention can be essentially provided. Of course, the inflection point may be provided on both image formation and object sides, and the distortion correction effect can be positively provided in the periphery of the lens.

Concerning the local radius of curvature, the following is important for the correction of distortion in the present invention: a distance (distance from the optical axis) of a point at which the refractive power is changed from positive to negative on the second surface (on the image formation side) of the photographic lens is larger than that of a point at which the refractive power is changed from positive to negative on the first surface (object side) of the photographic lens. This is related to the following: the height of a position on the image formation side, at which light flux having a large angle of view to generate distortion passes through the lens, is smaller than that of a position on the object side.

From another point of view, the curved surface of the photographic lens is formed in the following manner: as a point on the lens surface farther from the optical axis, the lens surface is formed to be aspherical in the negative direction, wherein the negative direction coincides with the direction of the object side. Preferably, both image formation and object sides are formed aspherical and provided with an amount of negative aspherical deformation.

The present invention is effectively applied to a photographic lens, the half angle of view of which is not less than 25° and not more than 50°. Especially when the half angle of view is not less than 30 and not more than 40°, distortion can be effectively corrected.

According to the present invention, when the image formation surface is curved on the lens side, more effect can be provided. Higher effect can be provided when a curved surface is adopted, wherein the radius of curvature of the curved surface is 80 to 270 mm, and more preferably 100 to 200 mm.

Optical glass can be applied to the present invention, and high effect is provided. Even when plastic is applied to the present invention, the occurrence of distortion generated in a wide-angle lens can be inhibited. When the present invention is applied, the photographic lens mechanism can be made simple, and the cost can be reduced.

In the present invention, it is preferable to use glass or plastic satisfying the following conditions.

$$1.45 < nd < 1.7 \quad (2)$$

$$45 < \nu d \quad (3)$$

When a value of nd is smaller than the lower limit shown in condition (2), it becomes difficult to correct spherical aberration and coma, and when a value of nd is larger than the upper limit shown in condition (2), distortion is increased.

When a value of $\nu d$ is smaller than the lower limit of condition (3), axial chromatic aberration and transverse chromatic aberration are increased, which is not preferable.

## BRIEF DESCRIPTION OF THE DRAWINGS

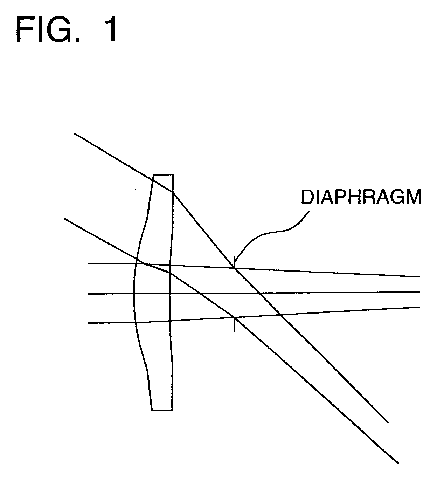

Fig. 1 is a sectional view of the lens system of the present invention in which a photographic lens and a diaphragm are disposed;

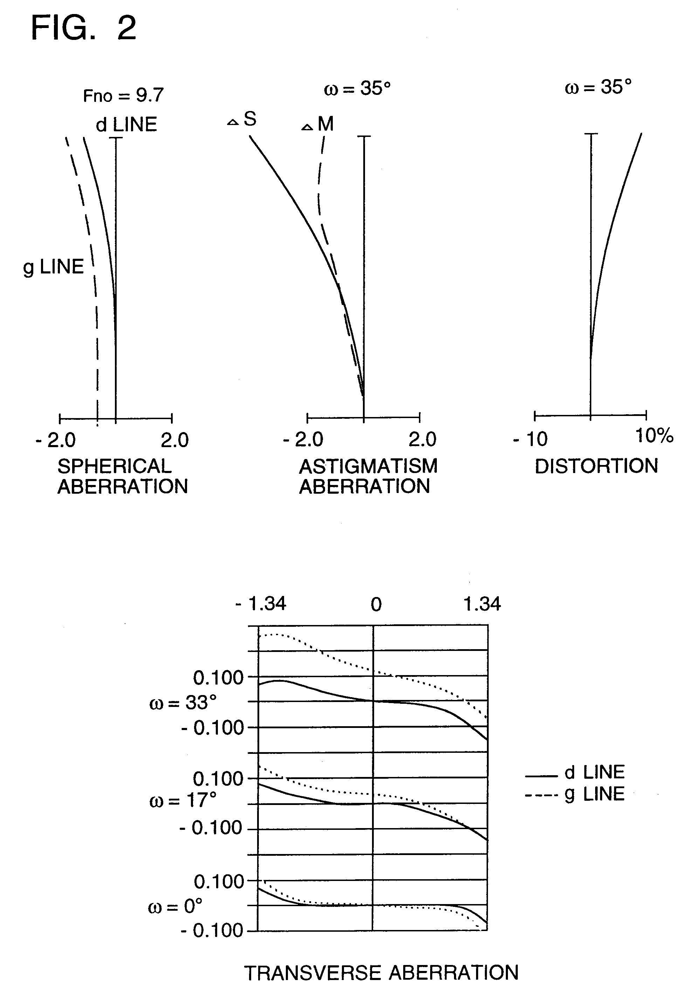

Fig. 2 is a view showing aberration of the first example of the photographic lens system of the present invention;

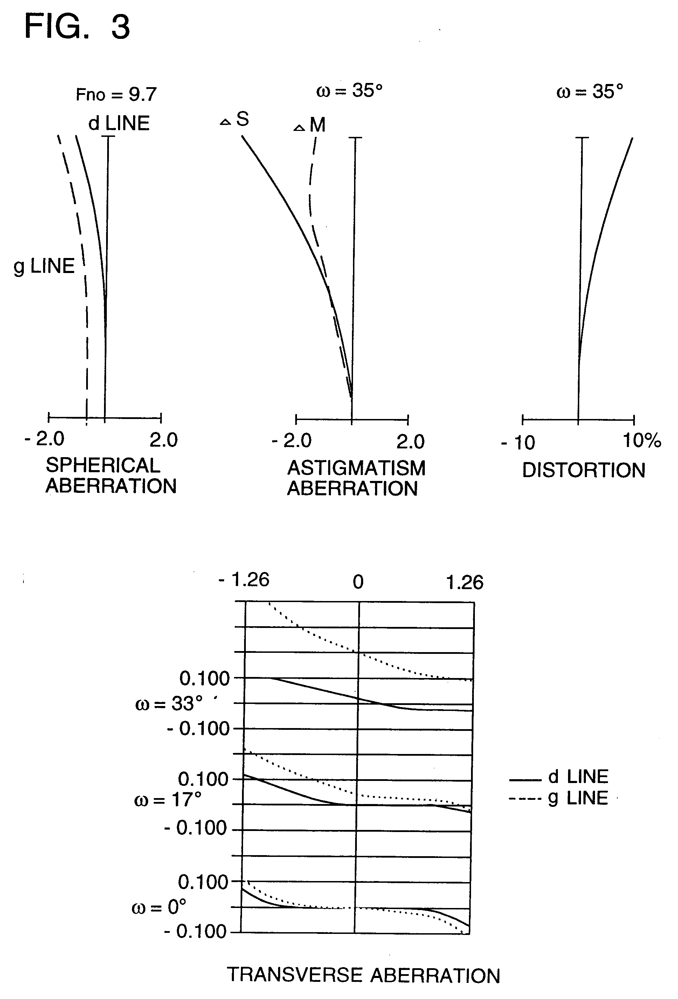

Fig. 3 is a view showing aberration of the second example of the photographic lens system of the present invention; and

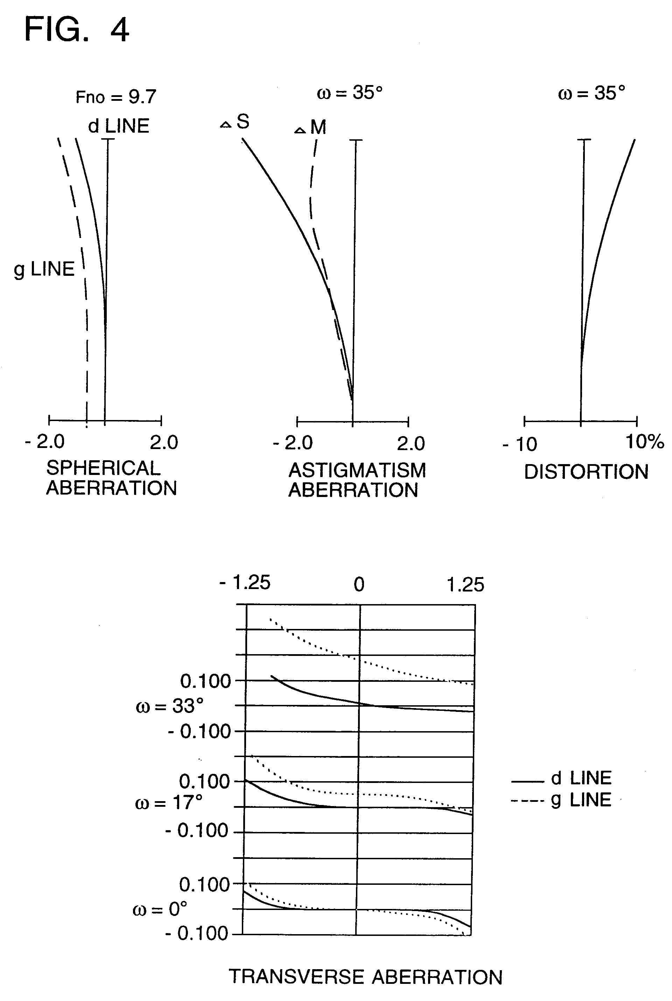

Fig. 4 is a view showing aberration of the third example of the photographic lens system of the present invention.

## DETAILED DESCRIPTION OF THE PREFERRED EMBODIMENTS

Examples of the present invention will be explained as follows. Reference numerals in the following tables are as follows.

r: radius of curvature of the refraction surface

d: interval of the refraction surface

nd: refractive index of lens material

$\nu d$: Abbe's number of lens material

F: F-number

$\omega$: half angle of view

The configuration of the aspherical surface of the present invention is expressed by equation 1, wherein the direction of the optical axis is represented by X axis, and the direction perpendicular to the optical axis is represented by Y axis.

[Equation 1]

$$X = \frac{Y^2/r}{1+\sqrt{1-(1+K)\,Y^2/r^2}} + \sum_{i=2}^{\infty} A_{2i}Y^{2i}$$

In the above equation, r represents a paraxial radius of curvature, and K and $A_{2i}$ represent aspherical surface coefficients.

In the following examples, the image formation surface is a curved surface, being curved onto the lens side with respect to the longitudinal direction of the image surface, wherein the radius of curvature is R = 110.

In the table of an aspherical configuration, local radii of curvature are shown with respect to the height from the optical axis. When a sign is "+", the radius of curvature is on the image side surface, and when a sign is "-", the radius of curvature is on the object side.

When an amount of aspherical surface deformation is represented by $\Delta X$, it is shown by Equation 2 as follows.

[Equation 2]

$$\Delta X = \frac{Y^2/r}{1+\sqrt{1-(1+K)\,Y^2/r^2}} + \sum_{i=2}^{\infty} A_{2i}Y^{2i} - \frac{Y^2/r}{1+\sqrt{1-Y^2/r^2}}$$

Example 1

f=30.75     F=9.7     $\omega$=35°

| Surface No. | r | d | nd | νd |
|---|---|---|---|---|
| 1 | 9.057 | 1.900 | 1.492 | 57.0 |
| 2 | 21.008 | 2.650 | | |
| Diaphragm | ∞ | | | |

| First surface aspherical coefficient | |
|---|---|
| k =-0.34867×10⁻⁵ | |
| A₄=-0.54776×10⁻³ | A₆ =-0.20781×10⁻⁴ |
| A₈=-0.87890×10⁻⁶ | A₁₀ =-0.19552×10⁻⁷ |

| Second surface aspherical coefficient | |
|---|---|
| K =-0.51728×10⁻⁷ | |
| A₄=-0.94200×10⁻³ | A₆ =-0.57988×10⁻⁴ |
| A₈=-0.276370×10⁻⁵ | A₁₀=-0.47370×10⁻⁷ |
| d₂/f=0.086 | |

## First surface aspherical configuration

| Height from the optical axis | Local radius of curvature |
|:---:|:---:|
| 0.5 | 9.196 |
| 1.0 | 9.673 |
| 1.5 | 10.743 |
| 2.0 | 13.282 |
| 2.5 | 21.895 |
| 3.0 | -428.880 |
| 3.5 | -12.829 |
| 4.0 | -5.242 |
| 4.5 | -3.010 |

| Second surface aspherical configuration | |
|:---:|:---:|
| Height from the optical axis | Local radius of curvature |
| 0.5 | 22.385 |
| 1.0 | 28.759 |
| 1.5 | 65.330 |
| 2.0 | -62.880 |
| 2.5 | -17.076 |
| 3.0 | -9.200 |
| 3.5 | -6.243 |
| 4.0 | -4.704 |
| 4.5 | -3.519 |

First surface aspherical configuration

| Height from the optical axis | Aspherical deformation amount |
|---|---|
| 0.5 | −0.00004 |
| 1.0 | −0.00057 |
| 1.5 | −0.00303 |
| 2.0 | −0.01030 |
| 2.5 | −0.02763 |
| 3.0 | −0.06413 |
| 3.5 | −0.13480 |
| 4.0 | −0.26245 |
| 4.5 | −0.47839 |

| Second surface aspherical configuration | |
|---|---|
| Height from the optical axis | Aspherical deformation amount |
| 0.5 | -0.00006 |
| 1.0 | -0.00100 |
| 1.5 | -0.00536 |
| 2.0 | -0.01812 |
| 2.5 | -0.04719 |
| 3.0 | -0.10324 |
| 3.5 | -0.19879 |
| 4.0 | -0.34722 |
| 4.5 | -0.56438 |

Example 2

f=30.73   F=9.7   ω=35°

| Surface No. | r | d | nd | vd |
|---|---|---|---|---|
| 1 | 7.901 | 1.900 | 1.492 | 57.0 |
| 2 | 15.237 | 3.894 | | |
| Diaphragm | | | | |

| First surface aspherical coefficient | |
|---|---|
| $K = 0.68218 \times 10^{-1}$ | |
| $A_4 = -0.65279 \times 10^{-3}$ | $A_6 = 0.24692 \times 10^{-5}$ |
| $A_8 = -0.27839 \times 10^{-5}$ | $A_{10} = 0.94627 \times 10^{-7}$ |
| $A_{12} = -0.13252 \times 10^{-8}$ | |

Second surface aspherical coefficient

$$K = -0.17156 \times 10^{-2}$$

$$A_4 = -0.10388 \times 10^{-2} \qquad A_6 = -0.42726 \times 10^{-4}$$

$$A_8 = 0.21286 \times 10^{-5} \qquad A_{10} = -0.56008 \times 10^{-7}$$

$$A_{12} = 0.49295 \times 10^{-9}$$

$$d_2/f = 0.127$$

| First surface aspherical configuration | |
|---|---|
| Height from the optical axis | Local radius of curvature |
| 0.5 | 8.021 |
| 1.0 | 8.392 |
| 1.5 | 9.110 |
| 2.0 | 10.593 |
| 2.5 | 14.572 |
| 3.0 | 38.299 |
| 3.5 | -24.009 |
| 4.0 | -6.649 |
| 4.5 | -2.961 |

## Second surface aspherical configuration

| Height from<br>the optical axis | Local radius<br>of curvature |
|:---:|:---:|
| 0.5 | 16.015 |
| 1.0 | 19.184 |
| 1.5 | 30.354 |
| 2.0 | 298.732 |
| 2.5 | -26.893 |
| 3.0 | -11.320 |
| 3.5 | -6.653 |
| 4.0 | -4.443 |
| 4.5 | -3.207 |

| First surface aspherical configuration | |
|:---:|:---:|
| Height from the optical axis | Aspherical deformation amount |
| 0.5 | -0.00004 |
| 1.0 | -0.00064 |
| 1.5 | -0.00325 |
| 2.0 | -0.01061 |
| 2.5 | -0.02757 |
| 3.0 | -0.06281 |
| 3.5 | -0.13124 |
| 4.0 | -0.25647 |
| 4.5 | -0.47391 |

| Second surface aspherical configuration | |
|---|---|
| Height from the optical axis | Aspherical deformation amount |
| 0.5 | -0.00007 |
| 1.0 | -0.00108 |
| 1.5 | -0.00569 |
| 2.0 | -0.01887 |
| 2.5 | -0.04827 |
| 3.0 | -0.10438 |
| 3.5 | -0.20029 |
| 4.0 | -0.35192 |
| 4.5 | -0.57960 |

Example 3

f=30.34    F=9.7    $\omega$=35°

| Surface No. | r | d | nd | $\nu$d |
|---|---|---|---|---|
| 1 | 6.957 | 1.65 | 1.492 | 57.0 |
| 2 | 12.011 | 3.77 | | |
| Diaphragm | $\infty$ | | | |

| First surface aspherical coefficient | |
|---|---|
| $K = -0.26123 \times 10^{-1}$ | |
| $A_4 = -0.37392 \times 10^{-3}$ | $A_6 = -0.99752 \times 10^{-5}$ |
| $A_8 = -0.92238 \times 10^{-6}$ | $A_{10} = -0.21041 \times 10^{-7}$ |
| $A_{12} = 0.42150 \times 10^{-7}$ | |

| Second surface aspherical coefficient | |
|---|---|
| $K = -0.44147 \times 10^{-2}$ | |
| $A_4 = -0.64805 \times 10^{-3}$ | $A_6 = -0.29691 \times 10^{-4}$ |
| $A_8 = -0.37917 \times 10^{-6}$ | $A_{10} = 0.20124 \times 10^{-7}$ |
| $A_{12} = -0.25520 \times 10^{-9}$ | |
| $d_2/f = 0.124$ | |

First surface aspherical configuration

| Height from the optical axis | Local radius of curvature |
|:---:|:---:|
| 0.5 | 7.013 |
| 1.0 | 7.193 |
| 1.5 | 7.544 |
| 2.0 | 8.232 |
| 2.5 | 9.816 |
| 3.0 | 15.167 |
| 3.5 | −547.511 |
| 4.0 | −7.323 |
| 4.5 | −2.378 |

| Second surface aspherical configuration | |
|:---|---:|
| Height from the optical axis | Local radius of curvature |
| 0.5 | 12.305 |
| 1.0 | 13.385 |
| 1.5 | 16.184 |
| 2.0 | 25.417 |
| 2.5 | 368.216 |
| 3.0 | -18.376 |
| 3.5 | -7.164 |
| 4.0 | -3.894 |
| 4.5 | -2.577 |

| First surface aspherical configuration | |
|---|---|
| Height from the optical axis | Aspherical deformation amount |
| 0.5 | -0.00002 |
| 1.0 | -0.00039 |
| 1.5 | -0.00208 |
| 2.0 | -0.00705 |
| 2.5 | -0.01906 |
| 3.0 | -0.04559 |
| 3.5 | -0.10153 |
| 4.0 | -0.21567 |
| 4.5 | -0.44050 |

| Second surface aspherical configuration | |
|---|---|
| Height from the optical axis | Aspherical deformation amount |
| 0.5 | -0.00004 |
| 1.0 | -0.00068 |
| 1.5 | -0.00363 |
| 2.0 | -0.01235 |
| 2.5 | -0.03298 |
| 3.0 | -0.07560 |
| 3.5 | -0.15573 |
| 4.0 | -0.29564 |
| 4.5 | -0.52528 |

According to the photographic lens of the present invention, the structure is simple, composed of a single lens and a diaphragm, and distortion is appropriately corrected by the specific aspherical surface of the present invention, even in the case of a wide-angle lens. As shown in the aberration diagram of the example, even when the half angle of view is 35°, the aberration is appropriately corrected to a value of 7 to 9%. As can be seen in the traverse aberration diagram, the amount of coma flare is small, and astigmatism aberration is appropriately corrected an intermediate portion of the angle of view, and moreover spherical aberration and chromatic aberration are sufficiently corrected so that excellent image formation ability can be provided.

**Claims**

1. A photographic lens comprising:
   (a) a positive meniscus lens having a convex surface which faces an object side, provided between an object and an image forming plane, for projecting an object image on the image forming plane, wherein a curved surface of the meniscus lens at least opposite to the image forming plane is formed in accordance with a function by which an amount of deformation of aspherical surface in a position on the meniscus lens surface is negatively increased, the further the position is from the optical axis of the meniscus lens toward a periphery; and
   (b) a diaphragm provided between the meniscus lens and the image forming plane.

2. A photographic lens comprising:

12

(a) a positive meniscus lens having a convex surface which faces an object side, provided between an object and the image forming plane, for projecting an object image on the image forming plane, wherein the meniscus lens has an aspherical surface on which a local center of curvature of a curved surface at a position at least opposite to the image forming plane is moved from the image forming plane side to the object side, the further the position is from the optical axis of the lens toward a periphery; and
(b) a diaphragm provided between the meniscus lens and the image forming plane.

3. A photographic lens comprising:
(a) a positive meniscus lens having a convex surface which faces an object side, provided between an object and the image forming plane, for projecting an object image on the image forming plane, wherein a curved surface of the meniscus lens at least opposite to the image forming plane has a point of inflection at a position other than the optical axis of the meniscus lens; and
(b) a diaphragm provided between the meniscus lens and the image forming plane.

4. The photographic lens of claim 1, wherein the image forming plane is cylindrical being curved on the meniscus lens side.

5. A photographic lens comprising:
(a) a positive meniscus lens having a convex surface which faces an object side, provided between an object and an image forming plane, for projecting an object image on the image forming plane which is a cylindrical surface curved on the meniscus lens side, wherein a curved surface of the meniscus lens at least opposite to the image forming plane has a point of infection at a position other than the optical axis of the meniscus lens and a curved surface opposite to the object has a point of infection at a position further from the optical axis than the position of the point of infection on the image forming plane side; and
(b) a diaphragm provided between the positive meniscus lens and the image forming plane.

6. A photographic lens system comprising:
(a) a positive meniscus lens having a convex surface which faces an object side, provided between an object and an image forming plane which is a cylindrical surface curved on the meniscus lens side, for projecting an object image on the image forming plane; and
(b) a diaphragm provided at a predetermined position between the image forming plane and the meniscus lens, wherein a curved surface of the meniscus lens at least opposite to the image forming plane has an infection point at a position other than the optical axis of the meniscus lens, and a curved surface of the meniscus lens on the object side has an infection point at a position further from the optical axis than the position of the point of inflection on the image forming plane side.

7. A camera comprising:
(a) a positive meniscus lens having a convex surface which faces an object side, provided between an object and an image forming plane which is a cylindrical surface curved on the meniscus lens side, for projecting an object image on the image forming plane;
(b) a diaphragm provided at a predetermined position between the image forming plane and the meniscus lens; and
(c) supplying means for supplying a photographic film along the image forming plane, wherein a curved surface of the meniscus lens at least opposite to the image forming plane has a point of infection at a position other than the optical axis of the meniscus lens and a curved surface on the object side has a point of infection at a position further from the optical axis than the position of the point of infection on the image forming plane side.

8. The camera of claim 7, wherein the lens is a wide angle lens having the angle of view of which is not less than 50°.

9. The photographic lens of claim 4, wherein the radius of curvature of the image forming plane falls into from 80 to 270 mm.

10. The photographic lens of claim 1, wherein the following inequalities are satisfied:
$$0.05 < d/f < 0.15$$
where f represents the focal length of the photographic lens and d represents the distance between the photographic lens and the diaphragm.

11. The photographic lens of claim 1, wherein the half angle of view of the meniscus lens is not less than 25° and not more than 50°.

12. The photographic lens of claim 4, wherein the radius of curvature of the cylindrical plane is 80 to 270 mm.

13. The photographic lens of claim 1, wherein the meniscus lens comprises either glass or plastic satisfying the following conditions:

$$1.45 < nd < 1.7$$
$$45 < \nu d$$

where nd represents the refractive index lens material and $\nu d$ represents the Abbe's number of lens material.

# FIG. 1

DIAPHRAGM

# FIG. 2

Fno = 9.7
d LINE

g LINE

- 2.0          2.0
SPHERICAL
ABERRATION

ω = 35°
△ S    △ M

- 2.0          2.0
ASTIGMATISM
ABERRATION

ω = 35°

- 10          10%
DISTORTION

- 1.34          0          1.34

0.100

ω = 33°

- 0.100

0.100

ω = 17°

- 0.100

0.100

ω = 0°

- 0.100

—— d LINE
---- g LINE

TRANSVERSE ABERRATION

16

# FIG. 3

Fno = 9.7

d LINE

g LINE

- 2.0            2.0

**SPHERICAL ABERRATION**

ω = 35°

△ S    △ M

- 2.0            2.0

**ASTIGMATISM ABERRATION**

ω = 35°

- 10            10%

**DISTORTION**

- 1.26        0        1.26

ω = 33°

0.100
- 0.100

ω = 17°

0.100
- 0.100

ω = 0°

0.100
- 0.100

——— d LINE
----- g LINE

**TRANSVERSE ABERRATION**

# FIG. 4

Fno = 9.7
d LINE

g LINE

- 2.0          2.0
SPHERICAL
ABERRATION

ω = 35°
S      M

- 2.0          2.0
ASTIGMATISM
ABERRATION

ω = 35°

- 10          10%
DISTORTION

- 1.25          0          1.25

0.100
ω = 33°
- 0.100

0.100
ω = 17°
- 0.100

0.100
ω = 0°
- 0.100

d LINE
g LINE

TRANSVERSE ABERRATION

18

## EUROPEAN SEARCH REPORT

European Patent Office

Application Number

EP 93 30 5223

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 200 760 (FUJI PHOTO FILM)<br>* page 12 , example 1 and line 6 *<br>* figures 4,2 *<br>--- | 1,4,13 | G02B13/18<br>G02B9/02<br>G02B3/04 |
| Y | PATENT ABSTRACTS OF JAPAN<br>vol. 14, no. 325 (P-1075)12 July 1990<br>& JP-A-21 06 710 ( KONICA ) 18 April 1990<br>* abstract * | 3,5-7 | |
| A | --- | 4,9,12 | |
| Y | WO-A-8 200 529 (OPTIK INNOVATION AB OIAB)<br>* abstract; claims 1,2 *<br>* page 2, line 31 - page 3, line 18 *<br>--- | 3,5-7 | |
| A | PATENT ABSTRACTS OF JAPAN<br>vol. 11, no. 219 (P-596)16 July 1987<br>& JP-A-62 036 623 ( ALPS ELECTRIC ) 17<br>February 1987<br>* abstract *<br>--- | 1 | |
| A | US-A-3 902 792 (PLUMMER)<br><br>* column 5, line 10 - line 40 *<br><br>----- | 8,10,11,<br>13 | TECHNICAL FIELDS SEARCHED (Int. Cl.5)<br><br>G02B |

The present search report has been drawn up for all claims

| Place of search | Date of completion of the search | Examiner |
|---|---|---|
| BERLIN | 09 SEPTEMBER 1993 | VON MOERS F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)